# EUROPEAN PATENT APPLICATION

(11) **EP 4 166 912 A1**
(43) Date of publication of application: **19.04.2023**
(21) Application number: 21202624.9
(22) Date of filing: 14.10.2021
(51) Int. Cl.: G01D 3/036

(54) **COMPUTER-IMPLEMENTED METHOD AND SYSTEM FOR IMPROVING THE SIGNAL QUALITY OF SENSOR DATA**

(71) Applicant: Siemens Aktiengesellschaft, 80333 München (DE)
(72) Inventor: Ardic Serpen, Burcu, 34752 Istanbul (TR); Ayvazoglu Celikkol, Ezgi, 34736 KADIKOY (TR); Gonul, Mustafa, 34406 Kagithane (TR); Korkmaz, Erman, 34732 Kadiköy (DE); Muslu Tastan, Gizem, 34854 istanbul (TR); Ulusoy, Asiye, 34846 Istanbul (TR)
(74) Representative: Siemens Patent Attorneys

(57) **Abstract**

Computer-implemented method for improving the signal quality of a first sensor data (SD1), wherein the first sensor data (SD1) is captured by a first sensing means (SM1), which is environmentally coupled to a first technical device (Dl), and at least one second sensor data (SD2, SD3) is captured by at least one second sensing means (SM2, SM3), wherein the at least one second sensing means (SM2, SM3) is environmentally decoupled from the first technical device (Dl), and a correlation function is calculated by a processor (CPU) with a memory, which is connected with the first and the at least one second sensing means (SM1-SM3), using the first and the at least one second sensor data (SD1-SD3) to estimate the background noise (BN), to which background noise (BN) the first and the at least one second sensing means (SM1-SM3) are exposed simultaneously, and the correlation function is used to reduce the background noise (BN) of the first sensor data (SD1).

## Description

The invention related to a computer-implemented method for improving the signal quality of a first sensor data, wherein the first sensor data is captured by a first sensing means, which is environmentally coupled to a first technical device, and at least one second sensor data is captured by at least one second sensing means.

Several devices like low-voltage motors are used in industrial environment for instance at a production line, in drives for manufacturing machines or transportation devices or transportation vehicles.

Low-voltage motors are electromechanical machines which do not expose any information about their operation.

Therefore, external sensors often need to be mounted for tracking the motor condition, like the sensor Siemens SIMOTICS CONNECT 400 (SC400) and SIDRIVE IQ Fleet for low-voltage motor diagnostics.

The measurements of such sensors, like the SC400, which are built for low voltage applications, are often negatively affected by vibration, temperature and the magnetic field generated by other devices in the environment or the environment itself.

Incorrect measurements can create false alarms, corrupt the data, and makes the data unreliable for motor diagnostic and machine learning algorithms.

Such sensor has no ability to use the data of other sensors in order to eliminate the ambient interference.

Moreover, depending on the applied measurement method, a low signal-to-noise-ratio can affect disadvantageously the captured measurement results due to a low signal level and a high background noise level.

In prior art statistical methods are currently used for instance in cloud applications to eliminate the noise and correct the distortion.

However, such methods can lead to lose the accuracy of the measurements, which can have undesired negative consequences:
First, the system can create false alarms, for instance when a motor vibration higher than the norm values might be caused by the other machines in the shopfloor.
Second, the system might miss an anomaly due to the suppressing effect of the ambient conditions, for instance very low ambient temperature might suppress the motor's temperature.

It is the objective of the invention to improve the signal quality of sensor data, which are disturbed by environmental noise, in a simple way.

The problem of the invention is solved by a method according to the invention, wherein the at least one second sensing means is environmentally decoupled from the first technical device, and a correlation function is calculated by a processor with a memory, which is connected with the first and the at least one second sensing means, using the first and the at least one second sensor data to estimate the background noise, to which background noise the first and the at least one second sensing means are exposed simultaneously, and the correlation function is used to reduce the background noise of the first sensor data.

External sensors can be used in addition to the sensor on the motor to eliminate the noise and correct the distortion generated by the environment.

With the proposed solution, instead of certain assumptions, background noise induced by environment effects can be measured directly with the help of an additional sensor.

The data measured by motor sensor will be corrected with the data from external sensors.

The effect removal algorithms can be applied easily and effectively on the data in the application by the software compared to the current algorithms applied without any false alarms.

In the context of the present invention, environmentally coupling means an interrelation between two or more sensor parameter data by physical factors, like a mechanical force or momentum, a time dependent behavior like vibration as well as temperature or pressure and similar.

In the context of the present invention, environmentally decoupling means a much lower interrelation between two or more sensor parameters or data by physical factors as between coupled sensor parameters as defined just before.

A decoupling between sensor data can be achieved by a signal ratio between two sensor parameters of at least the factor of 10, preferably by the factor of 100 and more preferably by the factor of 1000 or 10000.

In a further development of the invention, the at least one second sensing means is environmentally coupled to at least one second technical device.

Thus, the second sensor means can be used to capture sensor data from the second device as well as to capture background noise data for the further calculation of background noise data related to the first sensor means.

Therefore, a dual use of the second sensor means can be achieved, which improves the system efficiency at all and lowers the system complexity and related costs.

In a further development of the invention, the at least one second sensing means is mounted stationary apart from the first and the at least one second technical device.

Thus, an isolation of general background noise related to noise produced individually by dedicated devices can be improved. The separation between sensor data of devices and generic noise can be performed in a simpler way, which allows to use cheaper processors with simpler architectures for instance at edge devices.

In a further development of the invention, the environmental coupling is affected by a mechanical factor, in particular vibration, by an environmental factor, in particular temperature or pressure, and/or an electric factor, in particular an electric field or a magnetic field.

A mechanical factor can be for instance vibration, which affects both the first and the at least second sensor means simultaneously.

An environmental factor can be for instance temperature or pressure, which affects both the first and the at least second sensor means simultaneously.

An electrical factor can be for instance a static or a dynamic magnetic or electric field, which affects both the first and the at least second sensor means simultaneously.

Such a factor can be sensed directly or indirectly by a sensor means by a related physical measurand, like the magnitude of a vibration or a temperature or the magnetic field strength.

The problem of the invention is solved by a system for a signal quality improvement of a first sensor data, comprising a first sensor means configured to capture the first sensor data, at least one second sensor means configured to capture at least one second sensor data and a processor with a memory, which is connected with the first and the at least one second sensing means and which is configured to receive the first and the at least one second sensor data, wherein the first sensing means is environmentally coupled to a first technical device, wherein the at least one second sensing means is environmentally decoupled from the first technical device, and the first and the at least one second sensing means are configured in a way, that they are exposed simultaneously to background noise, and the processor is configured to calculate a correlation function using the first and the at least one second sensor data to estimate the background noise, and the system is configured to carry out the method according to the invention, where the correlation function is used to the reduce the background noise related at the first sensor data.

In a further development of the invention, the at least one second sensing means is mounted stationary apart from the first and the at least one second technical device.

This allows an easy determination of the background noise related at the first sensor data by the processor due to a decoupling from impacts by the other, namely the at least one second technical device, which can be often subject of generating own noise, which influences the general background noise negatively.

Such a solution is preferred by simple edge devices providing a simple architecture for the processor.

In a further development of the invention, the at least one second sensing means is environmentally coupled to at least one second technical device.

Thus, it is not necessary to include an additional second sensor and the sensor of a further technical device can be co-used, which reduces the system complexity.

In addition, when considering the at least one second sensing means the background noise, which is influenced also by the at least one second sensing means itself, can be analyzed in a differentiating way, namely the noise of the at least one second sensing means can be distinguished better due to the direct coupling to the at least one second device.

In a further development of the invention, the at least one second sensing means is coupled for direct communication purposes to the first sensing means.

In the context of the present invention direct communication purposes mean for instance a peer-to-peer communication.

The direct communication allows to capture sensor means data, which are for instance inside the wireless coverage of a first and a second sensor means.

Supporting such data transmission, the sensor means are equipped with communication radios providing a two-way communication, implemented for instance by a 5G cellular network, a local Bluetooth network or a local Wi-Fi network or similar.

A single network element, as defined by said radios, can forward sensor data to the processor.

Basically, the processor can be implemented optionally within a device, which itself incorporates a sensing means.

Thus, a mesh sensor network can be obtained and the network for the sensor data transmission from the dedicated sensor means to the processor can be simplified.

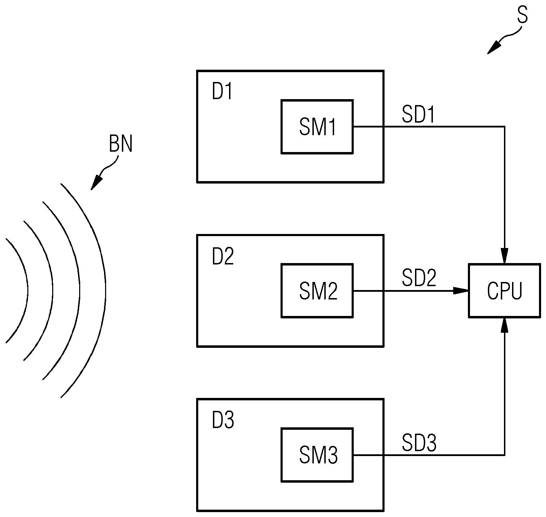

The invention is described in an exemplary embodiment with the attached figure in detail.

The figure shows a system S according to the invention for a signal quality improvement of first sensor data SD1.

The system S comprises a first sensor means SM1, which is configured to capture the first sensor data SD1.

Moreover, the system S comprises two second sensor means SM2, SM3, which are configured to capture respective second sensor data SD2, SD3.

Further, the system S comprises a processor CPU with a memory, which is connected with the first and the two second sensing means SM1-SM3, and which is configured to receive of the first and the two second sensor data SD1-SD3.

The second sensing means SM2, SM3 optionally can be coupled for direct communication purposes to the first sensing means SM1, for instance by a wireless mesh network.

The first sensing means SM1 is environmentally coupled to a first technical device D1.

The two second sensing means SM2, SM3 are environmentally decoupled from the first technical device D1 respectively.

The first and the two second sensing means SM1-SM3 are configured in a way, that they are exposed simultaneously to a background noise BN.

Additional sensors can be foreseen to measure for instance temperature, magnetic field, vibration, or acoustic signals.

Such sensors can be placed near to the motors D1-D3.

The sensing means SM1-SM3 can be realized by a Siemens sensor model SC400, which has built-in wireless and Bluetooth modules to make the communication with external sensors.

Other solutions isolating the motor from external factors are mostly expensive and require often extra equipment.

An additional sensor can be mounted at the wall to improve the wireless range.

The device D1 can be mounted in a proper position to be aware of the environment in a reliable way.

The processor CPU is configured to calculate a correlation function using the first and one or two of the two second sensor data SD1-SD3 to estimate the background noise BN.

The system S is configured to carry out the method according to the invention, where the correlation function is used to the reduce the background noise BN related of the first sensor data SD1.

The second sensing means SM2, SM3 are environmentally coupled to the respective technical devices D2, D3.

It is clear, that further not shown parts are necessary for the operation of a stator within an electrical drive, for instance mounting parts, electric connection to a power supply and electronic control components.

For the sake of better understanding these parts are not illustrated and described.

The invention is not restricted to the specific embodiments described in detail herein, but encompasses all variants, combinations and modifications thereof that fall within the framework of the appended claims.

### List of reference numerals:

- BN: background noise
- CPU: processing unit
- D1-D3: technical device, e.g. electric motor
- S: system
- SD1-SD3: sensor data
- SM1-SM3: sensing means

## Claims

1. Computer-implemented method for improving the signal quality of a first sensor data (SD1), wherein the first sensor data (SD1) is captured by a first sensing means (SM1), which is environmentally coupled to a first technical device (D1), and at least one second sensor data (SD2, SD3) is captured by at least one second sensing means (SM2, SM3), **characterized in that** the at least one second sensing means (SM2, SM3) is environmentally decoupled from the first technical device (D1), and a correlation function is calculated by a processor (CPU) with a memory, which is connected with the first and the at least one second sensing means (SM1-SM3), using the first and the at least one second sensor data (SD1-SD3) to estimate the background noise (BN), to which background noise (BN) the first and the at least one second sensing means (SM1-SM3) are exposed simultaneously, and the correlation function is used to reduce the background noise (BN) of the first sensor data (SD1).

2. Method according to claim 1, wherein the at least one second sensing means (SM2, SM3) is environmentally coupled to at least one second technical device (D2, D3).

3. Method according to claim 1, wherein the at least one second sensing means (SM2, SM3) is mounted stationary apart from the first and the at least one second technical device (D1-D3).

4. Method according to at least one of the preceding claims, wherein the environmental coupling is affected by a mechanical factor, in particular vibration, by an environmental factor, in particular temperature or pressure, and/or an electric factor, in particular an electric or a magnetic field.

5. System (S) for a signal quality improvement of a first sensor data (SD1), comprising a first sensor means (SM1) configured to capture the first sensor data (SD1), at least one second sensor means (SM2, SM3) configured to capture at least one second sensor data (SD2, SD3) and a processor (CPU) with a memory, which is connected with the first and the at least one second sensing means (SM1-SM3) and which is configured to receive the first and the at least one second sensor data (SD1-SD3), wherein the first sensing means (SM1) is environmentally coupled to a first technical device (D1), **characterized in that** the at least one second sensing means (SM2, SM3) is environmentally decoupled from the first technical device (D1), and the first and the at least one second sensing means (SM1-SM3) are configured in a way, that they are exposed simultaneously to background noise (BN), and the processor (CPU) is configured to calculate a correlation function using the first and the at least one second sensor data (SD1-SD3) to estimate the background noise (BN), and the system (S) is configured to carry out the method according to at least one of the preceding claims, where the correlation function is used to the reduce background noise (BN) related of the first sensor data (SD1).

6. System according to claim 5, wherein the at least one second sensing means (SM2, SM3) is environmentally coupled to at least one second technical device (D2).

7. System according to claim 5, wherein the at least one second sensing means (SM2, SM3) is mounted stationary apart from the first and the at least one second technical device (D1-D3).

8. System according to at least one of claims 5 to 7, wherein the at least one second sensing means (SM2, SM3) is coupled for direct communication purposes to the first sensing means (SM1).
